# EUROPEAN PATENT APPLICATION

(11) **EP 4 835 401 A1**
(43) Date of publication of application: **04.11.2026**
(21) Application number: 25210336.1
(22) Date of filing: 22.10.2025
(51) Int. Cl.: G01B 11/25

(54) **REAL-TIME VISUALIZATION OF AN OBJECT DURING SCANNING**

(30) Priority: 29.04.2025 EP 25173207
(71) Applicant: Volume Graphics GmbH, 69115 Heidelberg (DE)
(72) Inventor: REITER, Sebastian, 69221 Dossenheim (DE)
(74) Representative: Kaminski Harmann

(57) **Abstract**

The invention pertains to a method (100) for visualizing the progress of a scanning process of an object. The method comprises, in real time: receiving (110) data points from a scanning device performing the scanning process of the object; estimating (115) a surface normal at each of the received data points; adding (120) the received data points to a 3D grid, each data point being assigned to a cell of the grid; calculating (142) averaged data points for each cell, wherein a position of each averaged data point is calculated based on the positions of all points assigned to the respective cell, and an averaged surface normal of each averaged data point is calculated based on the estimated surface normals of all points assigned to the respective cell; associating (144) averaged-data-point information to at least one associated node of the grid, the averaged-data-point information comprising at least a position and an averaged surface normal of the averaged data point in the respective cell, the associated node being a node of the respective cell; classifying (146), based on the positions of the averaged data point and the averaged surface normals, one or more associated nodes of the grid as an inner node and one or more associated nodes of the grid as an outer node; for each inner node that is connected to an outer node by an edge of the grid, placing (148) a vertex at the position of the averaged data point associated to that inner node; generating (150) a mesh connecting all averaged data points, wherein inner and/or outer sides of the mesh are defined using the inner nodes and/or the outer nodes; and visualizing (160) the mesh to a user of the scanning device.

## Description

The present invention pertains to a computer-implemented method of visualizing a pre-view of an object in real time while the object is being scanned, i.e., before the scan is completed and before a final high-precision mesh is created after completion of the scanning process. In that way, a preliminary visualization may be provided based on partial data to aid the user in completing the scan.

It is known to perform 3D scanning of real-world objects or environments to capture three-dimensional data of its shape in order to generate a 3D model of the object. 3D scanners can be based on many different technologies. They include terrestrial laser scanners (TLS) as well as hand-held scanners, such as the Absolute Scanner AS1 of Hexagon. Hand-held laser scanners may be mounted on an absolute arm and/or be tracked by a laser tracker to allow acquiring absolute coordinates of the measured points.

When scanning a real-world object with such a hand-held laser scanner, hundreds of thousands of points may be acquired per second while a user moves the scanner across the surface of the object. For instance, using a line laser, points can be captured in individual stripes. While moving the scanner, more and more stripes are acquired. Those points are agglomerated by a computer software for later use in geometric dimensioning and tolerancing (GD&T) or for reconstruction purposes.

While scanning the object, the user has to ensure that the whole surface of the object is scanned. However, with existing approaches, there is no way to know for certain which parts of the object still need to be scanned, before the mesh has been calculated from the scan data. For instance, existing approaches, such as *Reshaper*, *Polyworks*, or *Geomagic*, first agglomerate a large batch of captured points before meshing this batch and merging it into an existing mesh. This solution leads to a two-phase workflow, where the user first has to scan a surface patch and afterwards inspect the visualized mesh for missing parts. Other approaches generate meshes from scanned points using so-called *Truncated Signed Distance Functions*. To this end, distances to a local surface reconstruction are recorded in a voxel grid. A mesh can be extracted from those distance values, using, e.g., the well-known *Marching* Cubes method (William Lorensen and Harvey Cline: "Marching cubes: A high resolution 3D surface construction algorithm", Computer Graphics, Vol. 21, No. 4, July 1987, p. 163-169). However, due to the computational overhead of local surface approximation and the number of values that have to be adjusted for each inserted point, such approaches are not suited for real-time mesh generation with tens to hundreds of updates per second.

It is therefore an object of the present invention to provide an improved method for providing visual feedback to the user of a hand-held laser scanner regarding the scanned portions of the object.

It is a particular object to provide such a method that allows providing the visual feedback faster and in real time, in particular immediately.

At least one of these objects is achieved by the method and the system according to the appended claims.

A first aspect of the invention pertains to a first computer-implemented method for visualizing the progress of a scanning process of an object. The method comprises, in real time:
- receiving data points from a scanning device performing the scanning process of the object;
- adding the received data points to a three-dimensional grid comprising nodes and edges;
- assigning each of the added data points to the closest node of the grid;
- calculating averaged data points for each closest node of the grid to which data points are assigned, wherein a position of each averaged data point is calculated based on the positions of all points assigned to the respective closest node;
- generating a mesh connecting all averaged data points; and
- visualizing the mesh to a user of the scanning device.

According to some embodiments of the first method, generating the mesh is performed using a Marching Cubes algorithm.

According to some embodiments of the first method, receiving the data points comprises receiving a surface normal for each data point. For instance, said surface normal may be an estimated surface normal and/or may correspond to an inverted scanning direction. According to some embodiments, an averaged surface normal is calculated for each averaged data points. According to some embodiments, generating the mesh is based on the averaged surface normals.

According to some embodiments of the first method,
- the scanning process is performed continuously, and the data points are received continuously from the scanning device;
- for each closest node of the grid to which new data points are assigned, a new averaged data point is calculated;
- the mesh is continuously updated to connect all averaged data points including new averaged data points; and
- the continuously updated mesh is visualized in real time.

According to some embodiments of the first method, the mesh is visualized to the user within less than a tenth of a second after the data points are received.

According to some embodiments of the first method, the scanning device is a hand-held laser scanner, such as a line scanner, and performing the scanning process comprises the user moving the scanning device across a surface of the object. According to some embodiments, receiving the data points from the scanning device comprises receiving at least one hundred thousand data points per second.

According to some embodiments of the first method, the three-dimensional grid is a sparse grid or a fine grid.

According to some embodiments, the first method comprises, after the scanning process is completed, computing a 3D model of the object based on the data points.

A second aspect of the invention pertains to a first scanning system. The scanning system comprises a hand-held laser scanner configured to scan an object by emitting a measurement beam towards a surface of the object, a display device comprising a display and a computing unit. The computing unit is configured to perform a visualization process for visualizing the progress of a scanning process of the object performed by the scanning device, the visualization process comprising, in real time:
- receiving data points from the scanning device;
- adding the received data points to a three-dimensional grid comprising nodes and edges;
- assigning each of the added data points to the closest node of the grid;
- calculating averaged data points for each closest node of the grid to which data points are assigned, wherein a position of each averaged data point is calculated based on the positions of all points assigned to the respective closest node;
- generating a mesh connecting all averaged data points; and
- effecting the display to visualize the mesh to a user of the system.

According to some embodiments of the first system, the computing unit is part of the display device.

According to some embodiments of the first system, the computing unit is configured to compute a 3D model of the object based on the data points after the scanning process is completed.

According to some embodiments of the first system, the hand-held laser scanner is mounted to an articulated arm. According to some embodiments, the display device is mounted to the hand-held laser scanner or the articulated arm.

A third aspect of the invention pertains to a first computer program product comprising program code for performing the first method. For instance, the computer program product may be run by the computing unit of a first system. In some embodiments, the computer program product is stored on a non-volatile memory.

A fourth aspect of the invention pertains to a second computer-implemented method for visualizing the progress of a scanning process of an object. The method comprises, in real time:
- receiving data points from a scanning device performing the scanning process of the object;
- estimating a surface normal at each of the received data points;
- adding the received data points to a three-dimensional grid comprising nodes and edges forming cells, each data point being assigned to one of the cells;
- calculating, for each cell having at least two data points assigned, averaged data points, wherein a position of each averaged data point is calculated based on the positions of all points assigned to the respective cell, and an averaged surface normal of each averaged data point is calculated based on the estimated surface normals of all points assigned to the respective cell;
- associating averaged-data-point information to at least one associated node, the averaged-data-point information comprising at least a position and an averaged surface normal of the averaged data point in the respective cell, the associated node being a node of the respective cell;
- classifying, based on the positions of the averaged data point and the averaged surface normals, one or more associated nodes of the grid as an inner node and one or more associated nodes of the grid as an outer node;
- for each inner node that is connected to an outer node by an edge of the grid, placing a vertex at the position of the averaged data point associated to that inner node;
- generating a mesh connecting all averaged data points, wherein inner and/or outer sides of the mesh are defined using the inner nodes and/or the outer nodes; and
- visualizing the mesh to a user of the scanning device.

According to some embodiments of the first or second method, receiving the data points from the scanning device comprises consecutively receiving a plurality of data point stripes, each data point stripe comprising a plurality of data points that are aligned along the respective stripe, particularly wherein the scanning device is a line scanner.

According to some embodiments of the first or second method, estimating the surface normals of the data points of a first stripe comprises
- performing a triangulation between the data points of the first stripe, the data points of a previously received stripe and the data points of a subsequently received stripe, so that a plurality of triangles are adjacent to each data point of the first stripe, and
- computing the surface normal for each data point in the first stripe as the normalized sum of the normals of the triangles adjacent to that data point.

In some embodiments, the triangulation comprises generating, for each data point of the first stripe, a triangle with the two closest data points of the previously received stripe, a triangle with the two closest data points of the subsequently received stripe, at least one triangle with a neighbouring data point on the first stripe and a data point of the previously received stripe, and at least one triangle with a neighbouring data point on the first stripe and a data point of the subsequently received stripe.

According to some embodiments of the second method, generating the mesh comprises using a Marching Cubes algorithm.

According to some embodiments of the second method, the averaged-data-point information comprises at least one of a sum of data points in the respective cell and a weight of each data point in the respective cell.

According to some embodiments of the second method, the averaged-data-point information is associated to a plurality of associated nodes. For instance, each node of a respective cell may be an associated node for the cell's averaged-data-point information.

According to some embodiments of the second method, the scanning process is performed continuously, and the data points are received continuously from the scanning device. For each cell of the grid to which new data points are assigned, a new averaged data point is calculated. The mesh is continuously updated to connect all averaged data points including new averaged data points, and the continuously updated mesh is visualized in real time.

According to some embodiments of the second method, the mesh is visualized to the user within less than a tenth of a second after the data points are received.

According to some embodiments of the second method, the scanning device is a hand-held laser scanner, e.g. a line scanner, and performing the scanning process comprises the user moving the scanning device across a surface of the object. For instance, receiving the data points from the scanning device comprises receiving at least one hundred thousand data points per second.

According to some embodiments of the second method, the three-dimensional grid is a sparse or fine grid.

According to some embodiments, the second method comprises, after the scanning process is completed, computing a 3D model of the object based on the data points.

A fifth aspect of the invention pertains to a second scanning system. The scanning system comprises a hand-held laser scanner configured to scan an object by emitting a measurement beam towards a surface of the object, a display device comprising a display, and a computing unit. The computing unit is configured to perform a visualization process for visualizing the progress of a scanning process of the object performed by the scanning device, the visualization process comprising, in real time,
- receiving data points from the scanning device;
- estimating a surface normal at each of the received data points;
- adding the received data points to a three-dimensional grid comprising nodes and edges forming cells, each data point being assigned to one of the cells;
- calculating, for each cell having at least two data points assigned, averaged data points, wherein a position of each averaged data point is calculated based on the positions of all points assigned to the respective cell, and an averaged surface normal of each averaged data point is calculated based on the estimated surface normals of all points assigned to the respective cell;
- associating averaged-data-point information to at least one associated node, the averaged-data-point information comprising at least a position and an averaged surface normal of the averaged data point in the respective cell, the associated node being a node of the respective cell;
- classifying, based on the positions of the averaged data point and the averaged surface normals, one or more associated nodes of the grid as an inner node and one or more associated nodes of the grid as an outer node;
- for each inner node that is connected to an outer node by an edge of the grid, placing a vertex at the position of the averaged data point associated to that inner node;
- generating a mesh connecting all averaged data points, wherein inner and/or outer sides of the mesh are defined using the inner nodes and/or the outer nodes; and
- effecting the display to visualize the mesh to a user of the scanning device.

According to some embodiments of the second system, the computing unit is part of the display device.

According to some embodiments of the second system, the computing unit is configured to compute a 3D model of the object based on the data points, for instance after the scanning process is completed.

According to some embodiments of the second system, the hand-held laser scanner is mounted to an articulated arm. For instance, the display device may be mounted to the hand-held laser scanner or the articulated arm.

A sixth aspect of the invention pertains to a computer program product comprising program code for performing the second method. For instance, the computer program product may be run by the computing unit of a second system. In some embodiments, the computer program product is stored on a non-volatile memory.

The methods and systems described herein also may be combined with one another in various ways. For instance, steps only described with regards to the first method may be integrated into the second method and vice versa.

The invention in the following will be described in detail by referring to exemplary embodiments that are accompanied by figures, in which:
- Fig. 1: shows an exemplary system according to the invention while scanning an object;
- Figs. 2a-b: illustrate a sparse grid hierarchy;
- Figs. 3a-f: illustrate steps of a first exemplary embodiment of a method according to the invention;
- Fig. 4: is a flowchart illustrating the first exemplary embodiment of a method according to the invention;
- Figs. 5a-d: illustrate an exemplary process of estimating surface normals of captured data points;
- Figs. 6a-f: illustrate steps of a second exemplary embodiment of a method according to the invention; and
- Fig. 7: is a flowchart illustrating the second exemplary embodiment of a method according to the invention.

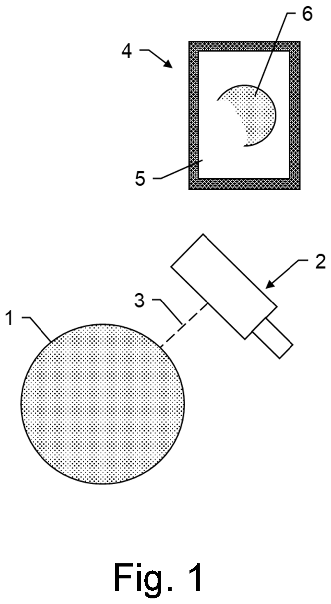

Figure 1 shows an exemplary system according to the invention while scanning an object 1. The system comprises a hand-held 3D laser scanner 2 that emits measurement beams in a laser fan 3 towards a surface of the object 1 to measure stripes of surface points while the laser fan 3 is moved over the surface. Optionally, to allow acquiring absolute coordinates of the measured points, the hand-held laser scanner 2 may be mounted on an articulated arm and/or be tracked by a laser tracker while being moved by a user. The system also comprises a display device 4 comprising a display 5, on which a pre-view image 6 can be displayed in real time to the user of the hand-held laser scanner 2. Although shown here as a separate device, the display device 4 may be integrated into the laser scanner 2 or be configured to be mounted to the laser scanner 2 or to the articulated arm. The pre-view image 6 shows those parts of the object that already have been scanned, thus allowing the user to more quickly scan the whole object 1 without gaps. A computing unit of the system (not shown here) is configured to perform a method according to the invention that allows visualizing the pre-view image 6 with an emphasis on speed and interactivity. For instance, the computing unit may be part of the display device 4.

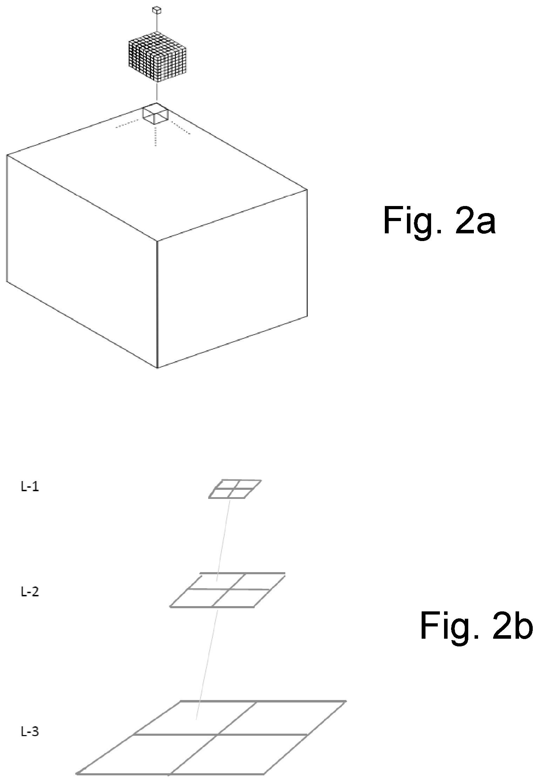

Figures 2a and 2b illustrate an exemplary hierarchy of a sparse grid used in an exemplary embodiment of a method according to the invention. This method uses an approach which efficiently agglomerates close points in an axis-aligned, regular, sparse grid hierarchy. For instance, the sparse grid hierarchy may be constructed in a similar way as described by the *OpenVDB* approach. To this end, a fine grid spacing is chosen, and an initial coarse cell is constructed so that the first batch of provided points lies close to its center.

The initial coarse cell contains a fixed grid and has a finite size. It is possible that the user scans points which are not contained in this initial coarse cell. Multiple coarse cells allow scanning of large objects or objects which are far from each other. While they are corresponding to the cells of a regular grid, they are not stored in a regular grid but associated with a dimensional index. Given the initial coarse cell C[0,0,0], as defined above, with a minimum corner (xMin, yMin, zMin) and an edge length hCoarse, the index of the coarse cell containing a point P=(x,y,z) can be computed as I=[floor ((x-xMin)/hCoarse, floor ((y-yMin)/hCoarse), floor ((z-zMin)/hCoarse)]. On the coarse level, a map is used through which a coarse cell can be accessed by providing such an index. Only those coarse cells are created which contain a point.

If a point is inserted outside of the bounds of the initial coarse cell, then an additional coarse cell is created, which contains that new point, and the algorithm proceeds with that coarse cell for the given point. The first coarse cell defines a three-dimensional regular structured grid, where the minimum corner of the initial coarse cell defines the origin of that grid. Cells in this grid can be identified with a three-dimensional index. Coarse cells can be accessed using this three-dimensional index and are only created if required.

Figure 2b shows 2D representations of three levels L-1, L-2, L-3 of a sparse hierarchical grid. L-3 is the base grid. Each cell of the base grid may hold a child grid with half the edge length. This child grid is considered to be in the next level L-2. If a point is inserted into a cell of the base grid L-3, it is forwarded to the child grid. If no such child grid exists, it is created, and the point is forwarded to the new child grid.

Similar to the base grid L-3, each cell in grid L-2 may contain a child grid. If a point is inserted into a cell of this grid, it is forwarded to the respective child grid. Again, if no such child grid exists, it is created, and the point is forwarded to the new child grid. A mesh is associated with each grid on this level L-2 (each corresponding to a cell in the parent level L-3). This mesh is later used for rendering. After the meshing is performed in the leaf grids of the top level L-1, the individual meshes of all children are joined into the associated meshes of level L-2. Only if new points are inserted into a grid on level L-2, the meshes will have to be joined again.

Individual fine grid cells are grouped in structured grids containing N×N×N cells (e.g., N = 8). In a sparse hierarchical grid structure with L levels, those structured grids residing at level L-1 are the leaves of the structure. On level L-2, the structured grids are contained in a sparse grid node of M×M×M cells (e.g., M=16). An individual mesh is associated with each such sparse grid node on level L-2. When preparing the visualization for the next frame, all those sparse grid nodes on level L-2 have to be visited, which contain children whose timestamp is more recent than the last mesh update.

The mesh and each such sparse grid cell can now be updated in parallel:
- Sum the collected values from the fine grid cells in associated active corner nodes, i.e., the sum of positions, the sum of estimated normals, and the number of points which are contained by a cell.
- For each fine cell which contains both empty and non-empty corner nodes, we can now construct a triangulation between the averaged positions at the non-empty corners. To this end, the triangle table described in the "Marching Cubes" algorithm may be used. For instance, non-empty nodes may be considered as *inner* nodes, empty nodes as *outer* nodes. Instead of placing vertices on cell edges, they may be placed at the averaged position stored in the associated non-empty node of an inserted edge.
- By comparing normals of generated triangles with the averaged estimated normals of corresponding non-empty nodes, we can quickly eliminate triangles which face into the interior of a scanned object, on the fly.

Updates done in individual cells during the described meshing-update procedure are fully decoupled from those in other cells. The algorithm is thus suited for parallel execution. For all cells on level L-2, whose mesh has just been updated, we can now update associated render buffers on the GPU. Due to the local nature of the described update procedure, typically only a small fraction of the overall vertex data of the visualized mesh has to be updated. The transferred amount of data to the GPU is thus small and the update is highly efficient.

In contrast to other grid-based meshing approaches of point clouds, insertion of new points is completely local and only affects the one cell which contains the given point. This allows for a much higher number of points which can be processed per second, and ultimately for much higher update rate of the visualization for large point sets. The latter is crucial for a fluid and interactive visualization, which in turn is crucial for an efficient scanning process.

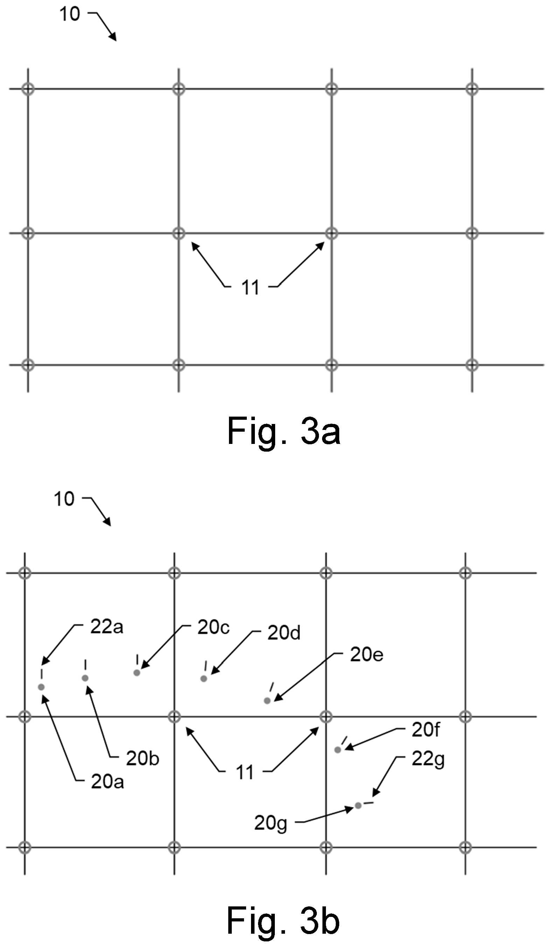

Figures 3a to 3f illustrate steps of a first exemplary embodiment of a method according to the invention. Although the real scanning is usually performed in 3D, for reasons of clarity and simplicity, the grid is shown in 2D here.

This method allows to generate a very fast, yet detailed mesh-based visualization of the scanned surface on the fly, while scanning is still in progress. New points can be quickly inserted into the existing structure and are immediately considered in highly efficient local updates of the visualized surface mesh. This method allows for viewing the preview mesh from any perspective, and even fluidly adapting the perspective to the orientation of the moving laser scanner while new points are inserted into the mesh and the mesh is continuously growing. The method allows providing users of a 3D stripe-based laser scanner immediate feedback (i.e., within fractions of a second) on the acquired surface during a scan process. This allows users to monitor and to adjust their scanning process in the very moment in which they acquire points of a certain structure of the scanned part.

As opposed to other approaches, the presented approach combines point agglomeration and mesh generation for visualization into one phase. Points are inserted into a continuously growing mesh on the fly. The visual feedback provided to the user is immediate and allows for a much tighter control of the scanning process.

Figure 3a shows an empty fine grid 10 comprising nodes (represented by circles) and edges (represented by lines) forming cells. The unfilled circles shown here represent "inactive" nodes 11. In Figure 3b, seven scanned points 20a-g are added to this fine grid 10. For each of the points 20a-g an estimated surface normal 22a-g (e.g., the scan direction) is provided - indicated here by a short line next to the respective point.

To insert this batch of points into the preview visualization, for each of the points 20a-g a cell of the fine grid 10 is found which geometrically contains that point. For each such fine grid cell, the sum of point positions which have already been inserted into that cell, the sum of estimated normals 22a-g of each inserted point 20a-g (e.g., the inverse scanning direction), and the number of inserted point positions are stored.

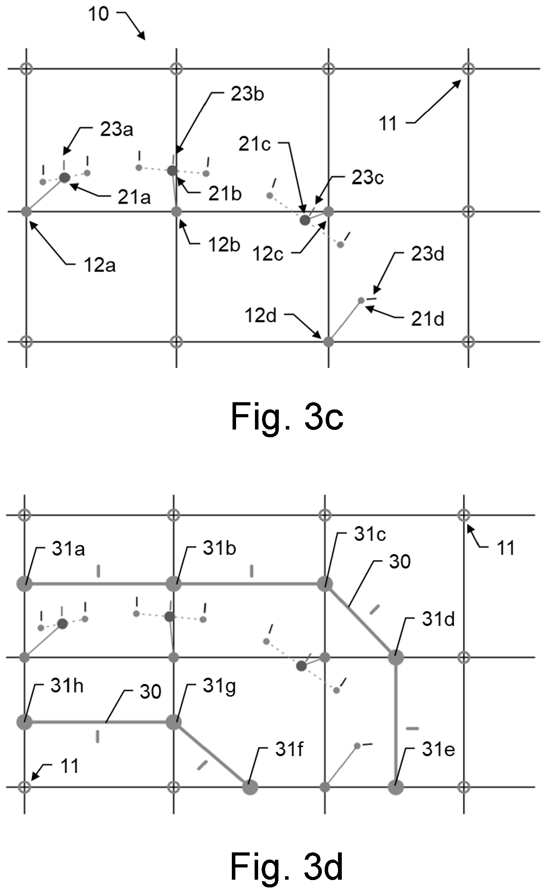

In Figure 3c, for each node in the grid average close data points 21a-d and their respective surface normal 23a-d are determined. Initially, all nodes are considered inactive (inactive nodes 11). If the distance of a node (cell corner) to one of the points 21a-d that were inserted is smaller or equal to half of the cell diameter, then the node/corner is considered active from then on. In each fine cell, a bit pattern may be stored which yields the active nodes 12 of that cell. The scanned points 20a-g of Figure 3b all lie close to four of the nodes in the grid 10. These nodes are thus "active" nodes 12 (represented by filled circles), while the other nodes that do not have any close points remain inactive nodes 11. For all points being closest to the first active node 12a, an average data point 21a and a corresponding average surface normal 23a are determined. The same is done for the second active node 12b (average data point 21b, average surface normal 23b) and for the third active node 12c (average data point 21c, average surface normal 23c). Since only one data point 20g is closest to the fourth active node 12d, average data point 21d (with average surface normal 23d) is equal to that data point. Calculating the average data points 21a-d may be based on the previously stored number of point positions and the stored sum of point positions. Similarly, calculating the average surface normals 23a-d may be based on the previously stored number of point positions and the stored sum of estimated normals.

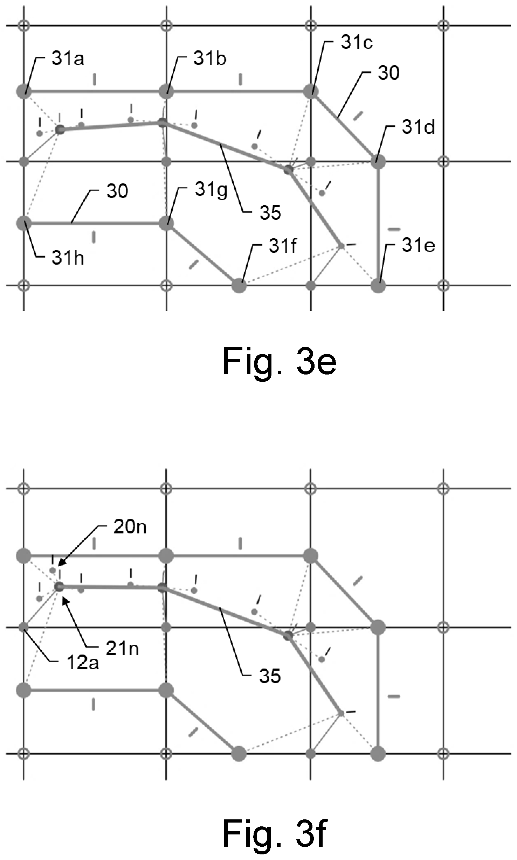

Figures 3d and 3e illustrate how the Marching Cubes algorithm is applied. In Figure 3d, active nodes (i.e., nodes having at least one associated data point) are considered as being "inside". Inactive nodes 11 are considered as being "outside". This information is sufficient to generate triangles using marching cubes/squares rules. For visualization, the position of the generated vertices 31a-h is visualized on the center of intersected edges.

In Figure 3e, the position of each generated vertex 31a-h is chosen to be the position of the associated averaged point 21a-d of the inner corner (= active node) of the intersected marching cubes edge. Those triangles, whose normal points into the opposing direction of at least one of the averaged normals 23a-c associated with the triangle's corners, are filtered out. The resulting surface connects the generated averaged data points 21a-d to create a mesh 35. It has to be understood that while the mesh here is represented by a 2D polyline, in 3D it is mesh 35 of triangles. This mesh 35 of triangles representing an object's surface can then be visualized to a user to indicate the progress of the scanning.

Figure 3f finally illustrates how adding further data points changes the mesh of triangles and thus updates the visualization presented to the user in real time. Here, an additional measurement point 20n is added together with its estimated normal, effecting the average close point (21a) to change its position, i.e., to become a new average close point 21n. In addition, the normal for this point is adapted (not shown here), and the point counter of the node 12a is increased from 2 to 3. Due to the change in position of the average close point 21n the mesh 35 is changed locally - in the shown example only the left segment is altered.

Advantageously, with the described method, adding more data points to an existing grid 10 is very efficient. The sum of all close data points and the number of close data points are kept in each grid node. When adding a new point 20n, the closest node has to be found, the point's position is added to the sum of positions at that node, and the close data point counter is increased by one.

To reduce grid artifacts in the reconstructed mesh, data points may be agglomerated at cells. Before meshing, those agglomerated values have to be considered in all active corner nodes of modified cells. To this end, in a first step the values in the corner nodes of each modified cell have to be cleared. Afterwards, for each cleared node, the agglomerated values of all neighbouring cells for which the node is an active node, are added to the sum of positions at the node. A node thus effectively averages data points from all neighbouring cells. This reduces the influence of outlier data points and reduces grid related artifacts in the extracted surface mesh.

Thus, here the position of the newly inserted point 20n is added to the sum of positions of the node 12a to which the new point is assigned, the point counter of node 12a is increased by one, and the timestamp of the parent cell of that node's cell is updated, so that it is known that the parent cell contains data which has not yet been considered in the resulting mesh.

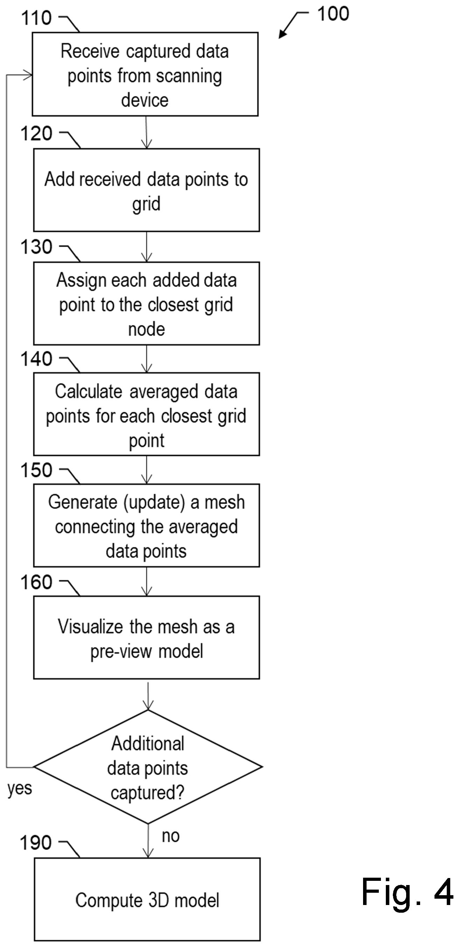

The flowchart of Figure 4 illustrates a first exemplary embodiment of a computer-implemented method 100 according to the invention.

By scanning an object, a plurality of data points is captured. This may be performed by a user holding a hand-held laser scanner. The captured data points are received 110 in real time and, as illustrated with respect to Figure 3b, added 120 to the grid. Each of the added data points is assigned 130 to the closest node of the grid. For each node that has been assigned at least two data points, an averaged data point is calculated 140 using the positions of all data points assigned to that node. This may comprise summing the values from all data points assigned to the same node, so that the sum of positions, the sum of estimated normals and the number of points are assigned to the node. A mesh, which connects the averaged data points, is generated 150 and visualized 160 to a user in real time as a pre-view model of the object while the user continues the scanning of the object. The steps 110 to 160 are repeated, with the surface being continuously updated while further data points are being captured, until the scanning is completed. Finally, when the scanning is completed, a "real" 3D model of the scanned object can be computed 190.

The illustrated method may be performed by the system of Figure 1. For instance, a computer program running on the system's computing unit may comprise program code for execution of the method.

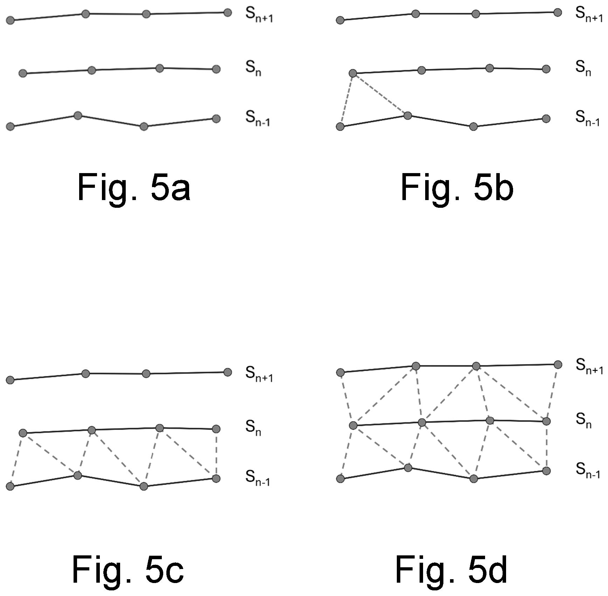

Figures 5a to 5d illustrate an exemplary process of estimating a surface normal of captured data points. For this process, stripes of data points need to be provided, e.g., as captured by a line scanner. The surface normal may be estimated at each point of a captured stripe Sₙ of data points before this stripe is inserted into the sparse grid hierarchy. To this end, both the points of a previous stripe Sₙ₋₁ and a next stripe Sₙ₊₁ are considered and a triangulation between the three stripes is generated by "sewing" the stripe Sₙ - e.g., from left to right. This allows computing the normal for each point in the stripe Sₙ as the normalized sum of the normals of all adjacent triangles.

Figure 5a shows three consecutive stripes Sₙ, Sₙ₋₁, Sₙ₊₁ with data points to be inserted into the sparse grid hierarchy. The lines connect neighboring data points in each individual stripe. Figure 5b shows the three stripes Sₙ, Sₙ₋₁, Sₙ₊₁ of Figure 5a, wherein, starting on the respective leftmost point of stripes Sₙ₋₁ and Sₙ, one of the two neighboring data points in stripes Sₙ₋₁ and Sₙ is chosen, so that the newly introduced connection is shortest. The normal of the corresponding triangle is then added to the estimated normal of associated data points in Sₙ. Figure 5c shows the three stripes Sₙ, Sₙ₋₁, Sₙ₊₁, wherein, advancing towards the right over all neighboring data points in Sₙ₋₁ and Sₙ, each time the shorter connection is chosen. For each introduced connection, the normal of the corresponding triangle is added to the associated data points in Sₙ. Figure 5d shows the three stripes Sₙ, Sₙ₋₁, Sₙ₊₁, wherein the steps of Figures 5a to 5c are repeated with stripes Sₙ and Sₙ₊₁. The resulting estimated surface normals in Sₙ yield a sufficient approximation of the associated surface normal of the underlying object. The triangulation itself may be discarded afterwards and need not be used to generate the final mesh.

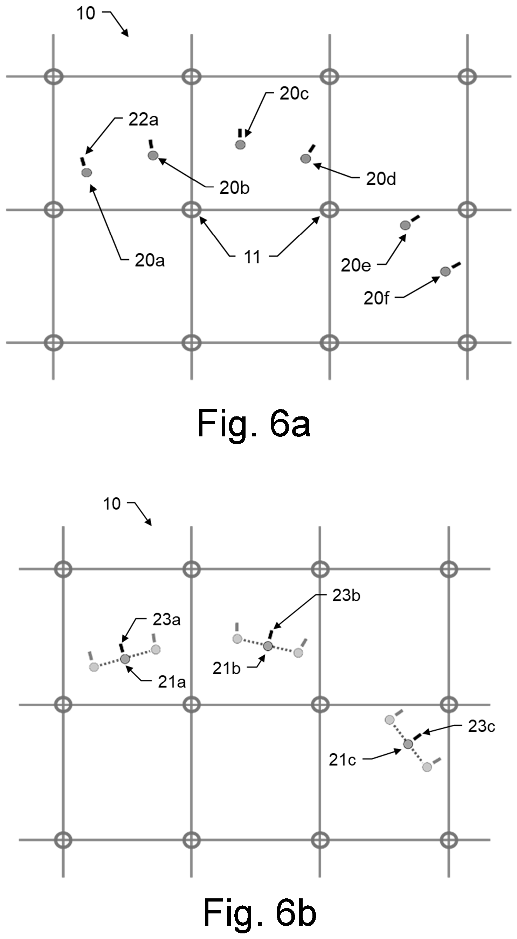

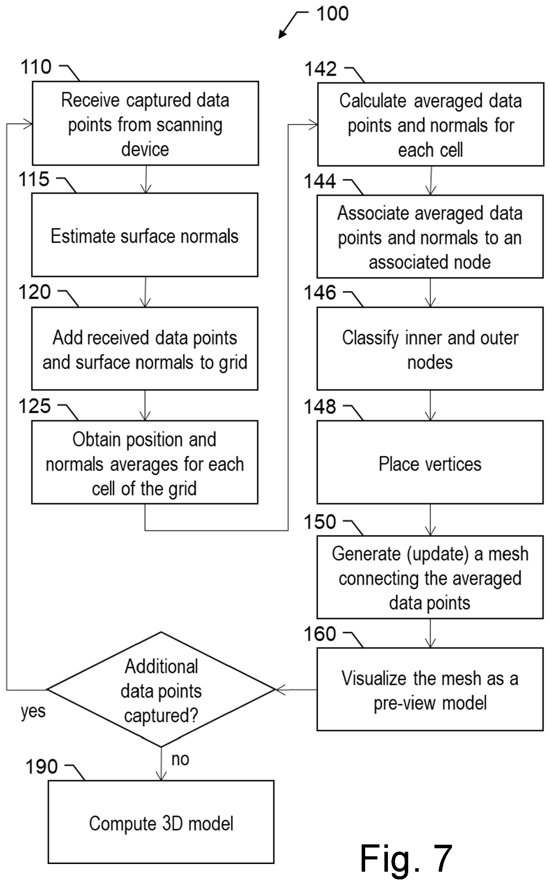

This estimation process optionally may be used in the method described above with respect to Figures 3a-f and 4 and in the method described below with respect to Figures 6a-f and 7.

Figures 6a to 6f illustrate steps of a second exemplary embodiment of a method according to the invention. Again, for reasons of clarity and simplicity, the grid is shown in 2D here. A surface normal of each data point is estimated, particularly before this point is added to the grid. In particular this initial estimation is performed as illustrated in Figures 5a to 5d.

In Figure 6a, six scanned points 20a-f are added to a fine grid 10. The fine grid 10 comprises nodes 11 (represented by circles) and edges (represented by lines) forming cells. For each of the points 20a-f the estimated surface normal 22a-f is provided - indicated here by a short line next to the respective point.

In Figure 6b, averages of positions 21a-c and averages of normals 23a-c of data points are maintained in each cell by storing the sum of positions and the sum of normals together with a sum of weights. New data points can thus be inserted by simply adding their position, their normal, and their weight to the respective sums. The weight of a data point, for instance, can be related to a confidence value.

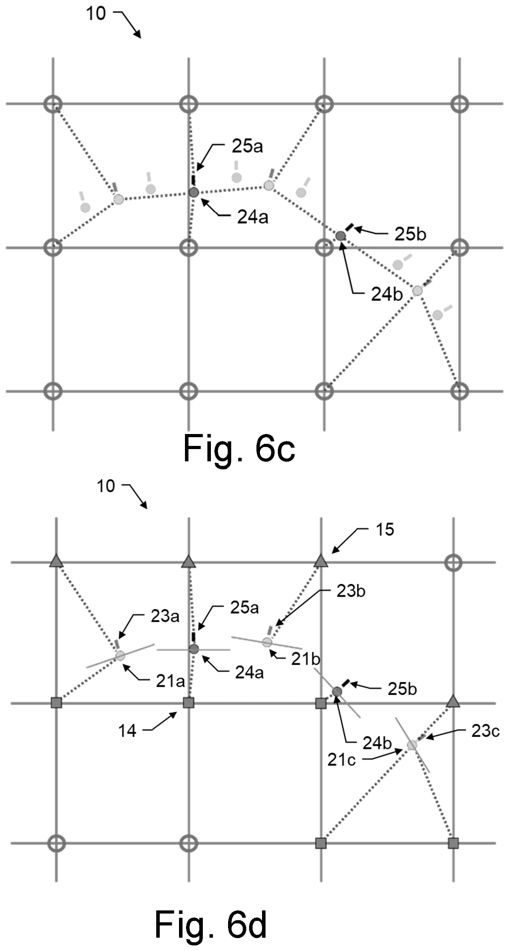

In Figure 6c, for each node in the "extraction grid", averaged positions 24a-b and normal sums 25a-b of cells adjacent to that node are computed. For each non-empty node, it can now be decided whether the node is inside or outside of the surface that is being reconstructed. This can be done by evaluating the plane equation based on the averaged positions 24a-b and normal sums 25a-b and on the averaged position 21a-c and the averaged normal 23a-c stored in the node. If the position of the node according to the regular grid pattern lies in front of that plane, the node is considered outside. If it lies behind the plane, the node is considered inside.

In Figure 6d, all grid nodes are classified as either "inner" node 14 (represented here by a square) or "outer" node 15 (represented here by a triangle) by comparing their position against the plane through the associated averaged position with the averaged normal. If a cell contains both empty and non-empty nodes, empty nodes can be classified as "inner" or "outer" nodes 14, 15 by comparing their regular grid position against the planes stored in neighboring non-empty nodes.

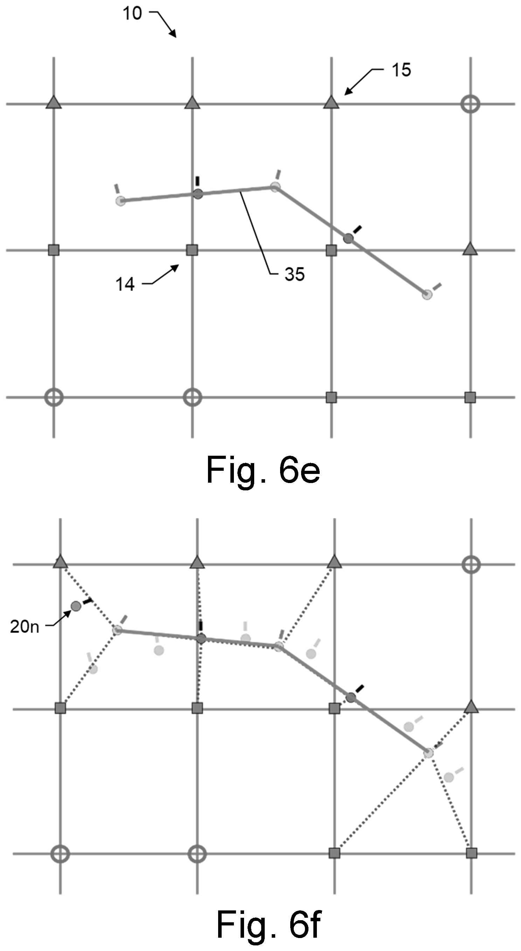

In Figure 6e, for each cell, unclassified corner nodes have been classified as "inner" nodes 14 (squares) or "outer" nodes 15 (triangles) by evaluating their position against that of the planes stored in the other corners of the cell. The averaged data points 21a-c and averaged positions 24a-b create a mesh 35. It has to be understood that while the mesh here is represented by a 2D polyline, in 3D it is mesh 35 of triangles. This mesh 35 of triangles representing an object's surface can then be visualized to a user to indicate the progress of the scanning.

For each fine cell that comprises, both, "inner" and "outer" corner nodes 14, 15, a triangulation between the averaged positions at the inner corners can be constructed. To this end, the "Triangulated Cubes" table described by Lorensen et al. in "Marching Cubes" may be used. Optionally, instead of placing triangle vertices on the edges of the extraction grid, as performed in conventional Marching Cubes, vertices of the generated triangles may be placed at the associated averaged position of the associated "inner" node of each cell-edge which connects an "inner" and an "outer" node. Now, marching-cube rules can be applied. This approach reduces the number of generated triangles significantly.

Figure 6f finally illustrates how adding further data points changes the mesh of triangles and thus updates the visualization presented to the user in real time. Here, an additional measurement point 20n is added together with its estimated normal, effecting the averaged data point 21a and, consequently, the averaged position 24a, to change their positions, i.e., to become a new average close point 21n and a new averaged position 24n. Due to the change in position of the average close point 21n the mesh 35 is changed locally - in the shown example only the left segment is altered.

Optionally, in order to improve the smoothness and visual fidelity of the generated mesh with minimal performance overhead, edges of the generated triangulation that connect two nodes, whose averaged normals span an angle greater than a threshold, can be refined on the fly - e.g., using cubic Hermite spline interpolation. Those splits can be performed in each cell individually before inserting generated triangles into the larger set of triangles at the parent cell.

Advantageously, with the described embodiment of the method, adding more data points to an existing grid 10 is very efficient. The sum of all close data points and the number of close data points are kept in each grid cell. When adding a new point 20n, the enclosing cell has to be found, the point's position is added to the sum of positions at that cell, and the data point counter is increased by one. To update the mesh, the outlined procedure is then repeated only for those cells which received a new data point and for those cells which share a grid node with altered cells. The extension of this algorithm to arbitrary point clouds is straightforward. While the stripe structure allows for an efficient normal estimation and for local updates of the mesh, the underlying technology can be used for arbitrary point clouds with estimated normals.

One possible scenario of this second embodiment is the application to structured-light scans. Here, images of an object are taken from multiple different perspectives. For each image, a point cloud is generated. If no normals are provided for the given point cloud, those can be estimated, e.g., using a 2D Delaunay triangulation of the projected point set and inferring point normals from associated triangles, afterwards. Points with associated estimated normals can then be inserted into the sparse grid structure, and the mesh can be updated on the fly, as described above with regards to this embodiment.

In another possible extension of the proposed method, the dot product between the estimated normal and the scan direction can be considered to derive a scalar value representing the trust or confidence in a given data point. When averaging positions and normals in a sparse grid structure, the influence of individual data points may be scaled by their trust or confidence rating. Instead of simply counting the number of points in a cell, the weights of individual data points can be summed, and the average value can be computed based on the summed weight. As a result, points that were scanned on surfaces onto which the scanner was directed would receive a higher weight than those which were captured accidentally when the scanner reached the rim of an object. Those accidentally scanned points often have a higher noise ratio and thus receive a smaller weight.

The flowchart of Figure 7 illustrates a second exemplary embodiment of a computer-implemented method 100 according to the invention.

By scanning an object, a plurality of data points is captured. This may be performed by a user holding a hand-held laser scanner. The captured data points are received 110 in real time, and - e.g., as described with respect to Figures 5a to 5d - a surface normal is estimated 115 at each of the received points. The data points and their estimated surface normals are added 120 to the grid (e.g., as shown in Figure 6a).

Averages of positions and averages of normals of data points are obtained 125 in each grid cell by storing the sum of positions and the sum of normals together with a sum of weights. This allows adding new data points based on their position, their estimated normal, and optionally a weighting.

For each node adjacent to a cell comprising data points (the "extraction grid"), averaged positions and normal sums of cells adjacent to that node are calculated 142. These averaged positions and normal sums are associated 144 with this node ("associated node"). The other nodes remain empty. For each associated (i.e., non-empty) node, it can now be decided whether the node is inside or outside by evaluating the plane equation based on the averaged position and the averaged normal stored in the node. If the position of the node according to the regular grid pattern lies in front of that plane, the node is classified 146 as an outside node. If it lies behind the plane, the node is classified 146 as an inside node.

For each inner node that is connected to an outer node by an edge of the grid, a vertex is placed 148 at the position of the averaged data point associated to that inner node. Thus, for each cell that comprises, both, inner and outer nodes, a triangulation between the averaged positions at the inner corners can be constructed. This is very similar to conventional Marching Cubes. Instead of placing triangle vertices on the edges of the grid, as performed in Marching Cubes, vertices of the generated triangles are placed at the associated averaged position of the associated inner node of each cell-edge which connects an inner and an outer node.

A mesh, which connects the averaged data points, is generated 150 and visualized 160 to a user in real time as a pre-view model of the object while the user continues the scanning of the object. The steps 110 to 160 are repeated, with the surface being continuously updated while further data points are being captured, until the scanning is completed. Finally, when the scanning is completed, a "real" 3D model of the scanned object can be computed 190.

The illustrated method may be performed by the system of Figure 1. For instance, a computer program running on the system's computing unit may comprise program code for execution of the method.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for visualizing the progress of a scanning process of an object (1), the method comprising, in real time,
- receiving (110) data points (20) from a scanning device (2) performing the scanning process of the object (1);
- estimating (115) a surface normal (22) at each of the received data points (20);
- adding (120) the received data points to a three-dimensional grid (10) comprising nodes (11, 12) and edges forming cells, each data point being assigned to one of the cells;
- calculating (142), for each cell having at least two data points assigned, averaged data points (21), wherein a position of each averaged data point (21) is calculated based on the positions of all points assigned to the respective cell, and an averaged surface normal (23) of each averaged data point (21) is calculated based on the estimated surface normals (22) of all points assigned to the respective cell;
- associating (144) averaged-data-point information to at least one associated node, the averaged-data-point information comprising at least a position and an averaged surface normal (23) of the averaged data point (21) in the respective cell, the associated node being a node of the respective cell;
- classifying (146), based on the positions of the averaged data point (21) and the averaged surface normals (23), one or more associated nodes of the grid as an inner node (14) and one or more associated nodes of the grid as an outer node (15);
- for each inner node (14) that is connected to an outer node (15) by an edge of the grid, placing (148) a vertex at the position of the averaged data point (21) associated to that inner node;
- generating (150) a mesh (35) connecting all averaged data points (21), wherein inner and/or outer sides of the mesh are defined using the inner nodes (14) and/or the outer nodes (15); and
- visualizing (160) the mesh (35) to a user of the scanning device (2).

2. Method (100) according to claim 1, wherein receiving (110) the data points (20) from the scanning device (2) comprises consecutively receiving a plurality of data point stripes (Sₙ, Sₙ₊₁, Sₙ₋₁), each data point stripe comprising a plurality of data points (20) that are aligned along the respective stripe, particularly wherein the scanning device (2) is a line scanner.

3. Method (100) according to claim 2, wherein estimating (115) the surface normals (22) of the data points (20) of a first stripe (Sₙ) comprises
- performing a triangulation between the data points (20) of the first stripe (Sₙ), the data points of a previously received stripe (Sₙ₋₁) and the data points of a subsequently received stripe (Sₙ₊₁), so that a plurality of triangles are adjacent to each data point (20) of the first stripe (Sₙ), and
- computing the surface normal (22) for each data point (20) in the first stripe (Sₙ) as the normalized sum of the normals of the triangles adjacent to that data point,
particularly wherein the triangulation comprises generating, for each data point (20) of the first stripe (Sₙ),
- a triangle with the two closest data points of the previously received stripe (Sₙ₋₁);
- a triangle with the two closest data points of the subsequently received stripe (Sₙ₊₁);
- at least one triangle with a neighbouring data point on the first stripe (Sₙ) and a data point of the previously received stripe (Sₙ₋₁); and
- at least one triangle with a neighbouring data point on the first stripe (Sₙ) and a data point of the subsequently received stripe (Sₙ₊₁).

4. Method (100) according to any one of the preceding claims, wherein generating (150) the mesh (35) comprises using a Marching Cubes algorithm.

5. Method (100) according to any one of the preceding claims, wherein
- the averaged-data-point information comprises at least one of a sum of data points in the respective cell and a weight of each data point in the respective cell; and/or
- the averaged-data-point information is associated (144) to a plurality of associated nodes, particularly wherein each node of a respective cell is an associated node for the cell's averaged-data-point information.

6. Method (100) according to any one of the preceding claims, wherein
- the scanning process is performed continuously, and the data points (20) are received (110) continuously from the scanning device (2);
- for each cell of the grid (10) to which new data points (20n) are assigned, a new averaged data point (21n) is calculated (145);
- the mesh (35) is continuously updated to connect all averaged data points (21) including new averaged data points (21n); and
- the continuously updated mesh (35) is visualized (160) in real time.

7. Method (100) according to any one of the preceding claims, wherein the mesh (35) is visualized (160) to the user within less than a tenth of a second after the data points (20) are received (110).

8. Method (100) according to any one of the preceding claims, wherein
- the scanning device (2) is a hand-held laser scanner, particularly a line scanner, and
- performing the scanning process comprises the user moving the scanning device (2) across a surface of the object (1),
particularly wherein receiving (110) the data points (20) from the scanning device (2) comprises receiving at least one hundred thousand data points (20) per second.

9. Method (100) according to any one of the preceding claims, wherein the three-dimensional grid (10) is a sparse or fine grid.

10. Method (100) according to any one of the preceding claims, comprising, after the scanning process is completed, computing (190) a 3D model of the object (1) based on the data points (20).

11. Scanning system, comprising
- a hand-held laser scanner (2) configured to scan an object (1) by emitting a measurement beam (3) towards a surface of the object (1),
- a display device (4) comprising a display (5), and
- a computing unit,
**characterized in that**
the computing unit is configured to perform a visualization process for visualizing the progress of a scanning process of the object (1) performed by the scanning device (2), the visualization process comprising, in real time,
- receiving (110) data points (20) from the scanning device (2);
- estimating (115) a surface normal (22) at each of the received data points (20);
- adding (120) the received data points to a three-dimensional grid (10) comprising nodes (11, 12) and edges forming cells, each data point being assigned to one of the cells;
- calculating (142), for each cell having at least two data points assigned, averaged data points (21), wherein a position of each averaged data point (21) is calculated based on the positions of all points assigned to the respective cell, and an averaged surface normal (23) of each averaged data point (21) is calculated based on the estimated surface normals (22) of all points assigned to the respective cell;
- associating (144) averaged-data-point information to at least one associated node, the averaged-data-point information comprising at least a position and an averaged surface normal (23) of the averaged data point (21) in the respective cell, the associated node being a node of the respective cell;
- classifying (146), based on the positions of the averaged data point (21) and the averaged surface normals (23), one or more associated nodes of the grid as an inner node (14) and one or more associated nodes of the grid as an outer node (15);
- for each inner node (14) that is connected to an outer node (15) by an edge of the grid, placing (148) a vertex at the position of the averaged data point (21) associated to that inner node;
- generating (150) a mesh (35) connecting all averaged data points (21), wherein inner and/or outer sides of the mesh are defined using the inner nodes (14) and/or the outer nodes (15); and
- effecting the display (5) to visualize (160) the mesh (35) to a user of the scanning device (2).

12. Scanning system according to claim 11, wherein the computing unit is part of the display device (4).

13. Scanning system according to claim 11 or claim 12, wherein the computing unit is configured to compute (190) a 3D model of the object (1) based on the data points (20), particularly after the scanning process is completed.

14. Scanning system according to any one of claims 11 to 13, wherein the hand-held laser scanner (2) is mounted to an articulated arm, particularly wherein the display device (4) is mounted to the hand-held laser scanner (2) or the articulated arm.

15. Computer program product comprising program code for performing the method (100) according to any one of claims 1 to 10.

16. Computer-implemented method (100) for visualizing the progress of a scanning process of an object (1), the method comprising, in real time,
- receiving (110) data points (20) from a scanning device (2) performing the scanning process of the object (1);
- adding (120) the received data points to a three-dimensional grid (10) comprising nodes (11, 12) and edges;
- assigning (130) each of the added data points to the closest node (12) of the grid (10);
- calculating (140) averaged data points (21) for each closest node (12) of the grid (10) to which data points are assigned, wherein a position of each averaged data point (21) is calculated based on the positions of all points assigned to the respective closest node (12);
- generating (150) a mesh (35) connecting all averaged data points (21); and
- visualizing (160) the mesh (35) to a user of the scanning device (2).

17. Method (100) according to claim 16, wherein generating (150) the mesh (35) is performed using a Marching Cubes algorithm.

18. Method (100) according to claim 16 or claim 17, wherein receiving (110) the data points (20) comprises receiving a surface normal (22) for each data point, particularly wherein the surface normal (22) is an estimated surface normal and/or corresponds to an inverted scanning direction.

19. Method (100) according to claim 18, wherein an averaged surface normal (23) is calculated for each averaged data points (21).

20. Method (100) according to claim 19, wherein generating (150) the mesh (35) is based on the averaged surface normals (23).

21. Method (100) according to any one of claims 16 to 20, wherein
- the scanning process is performed continuously, and the data points (20) are received (110) continuously from the scanning device (2);
- for each closest node (12) of the grid (10) to which new data points (20n) are assigned, a new averaged data point (21n) is calculated;
- the mesh (35) is continuously updated to connect all averaged data points (21) including new averaged data points (21n); and
- the continuously updated mesh (35) is visualized (160) in real time.

22. Method (100) according to any one of claims 16 to 21, wherein the mesh (35) is visualized (160) to the user within less than a tenth of a second after the data points (20) are received (110).

23. Method (100) according to any one of claims 16 to 22, wherein
- the scanning device (2) is a hand-held laser scanner, particularly a line scanner, and
- performing the scanning process comprises the user moving the scanning device (2) across a surface of the object (1),
particularly wherein receiving (110) the data points (20) from the scanning device (2) comprises receiving at least one hundred thousand data points (20) per second.

24. Method (100) according to any one of claims 16 to 23, wherein the three-dimensional grid (10) is a sparse or fine grid.

25. Method (100) according to any one of claims 16 to 24, comprising, after the scanning process is completed, computing (190) a 3D model of the object (1) based on the data points (20).

26. Scanning system, comprising
- a hand-held laser scanner (2) configured to scan an object (1) by emitting a measurement beam (3) towards a surface of the object (1),
- a display device (4) comprising a display (5), and
- a computing unit,
**characterized in that**
the computing unit is configured to perform a visualization process for visualizing the progress of a scanning process of the object (1) performed by the scanning device (2), the visualization process comprising, in real time,
- receiving (110) data points (20) from the scanning device (2);
- adding (120) the received data points to a three-dimensional grid (10) comprising nodes (11, 12) and edges;
- assigning (130) each of the added data points to the closest node (12) of the grid (10);
- calculating (140) averaged data points (21) for each closest node (12) of the grid (10) to which data points are assigned, wherein a position of each averaged data point (21) is calculated based on the positions of all points assigned to the respective closest node (12);
- generating (150) a mesh (35) connecting all averaged data points (21); and
- effecting the display (5) to visualize (160) the mesh (35) to a user of the system.

27. Scanning system according to claim 26, wherein the computing unit is part of the display device (4).

28. Scanning system according to claim 26 or claim 27, wherein the computing unit is configured to compute (190) a 3D model of the object (1) based on the data points (20) after the scanning process is completed.

29. Scanning system according to any one of claims 26 to 28, wherein the hand-held laser scanner (2) is mounted to an articulated arm, particularly wherein the display device (4) is mounted to the hand-held laser scanner (2) or the articulated arm.

30. Computer program product comprising program code for performing the method (100) according to any one of claims 16 to 25.
